# FASCICULE DE BREVET EUROPEEN

(11) **EP 0 859 049 B1**
(45) Date de publication et mention de la délivrance du brevet: **10.09.2003**
(21) Numéro de dépôt: 98400139.6
(22) Date de dépôt: 23.01.1998
(51) Int. Cl.: C12H 3/00

(54) **Procédé d'abaissement du taux en alcool dans les boissons alcoolisées**
Verfahren zum Herabsetzen des Alkoholgehalts alkoholhaltiger Getränke
Process to lower the alcohol content of alcoholic beverages

(30) Priorité: 30.01.1997 FR 9701139
(43) Date de publication de la demande: 19.08.1998
(73) Titulaire: SOCIETE COOL S.a.r.l., 07800 La Voulte sur Rhône (FR)
(72) Inventeur: Berrebi, Georges, 26270 Cliousclat (FR); Gaillard, Yvan, 78100 Saint-Germain-En-Laye (FR); Guth, Jean-Louis, 68200 Mulhouse (FR)
(74) Mandataire: Benoist, François

(56) Documents cités:
- EP-A- 0 332 738
- EP-A- 0 486 345
- DE-A- 4 105 834
- US-A- 4 214 011

## Description

La présente invention concerne un dispositif ou récipient particulier permettant de débarrasser partiellement voire totalement le vin (ou toute boisson alcoolisée équivalente) de l'alcool éthylique qu'il contient.

Ce dispositif ou recipient met en oeuvre des solides microporeux notamment du type zéolithe à caractère hydrophobe ou toute substance dont la structure poreuse est propice à l'adsorption dans la structure desquels les molécules d'alcool éthylique et également par exemple toutes les molécules de masse moléculaire inférieure voire égale à celle de l'alcool éthylique sont adsorbées sélectivement.

L'utlisation d'un tel récipient permet d'abaisser par exemple d'au moins 20 % la teneur en alcool d'une boisson alcoolisée par mise en contact de ladite boisson alcoolisée avec une couche d'au moins une substance solide, subtances solides dont le diamètre de pore et les caractéristiques d'hydrophobicité permettent l'adsorption spécifique de l'éthanol et autres alcools à bas poids moléculaire; la dite substance solide est choisie dans le groupe constitué par les zéolithes, les solides à structure microporeuse de type monolithe, des mousses, voire des tissus de ces substances dont la structure poreuse de base est propice à l'adsorption.

La zéolithe ou le solide à structure microporeuse présente généralement des ouvertures égales ou supérieures à environ 5 angstroems (1 angstroem = 10⁻¹⁰ m) et au moins 90 % des pores entre 5 et 10 angstroems de diamètre.

Dans le procédé, la dite substance solide est choisie dans le groupe constitué par les ZSM-5, ZSM-5 désaluminées de type silicalite, les zéolithes Y, à structure faujasite notamment, les polysilsesquioxanes, les gels arylsilsesquioxanes, les silices microporeuses amorphes sous forme de monolithes, les tamis moléculaires à chaîne carbonique, les quartz et les fibres de carbone activé.

L'elimination au moins partielle d'alcool par contact avec ces substances solides est décrite dans les brevets EP 332,738 et EP 486,345.

Le dispositif ou recipient de l'invention permet d'éliminer au moins en partie l'alcool des boissons alcoolisées mais en conservant dans la boisson les molécules responsables de la couleur, de l'arôme, du goût et de la saveur de la boisson et en particulier la molécule de triptophane dont la masse moléculaire est d'environ 233 g, molécule qui agit comme psychotrope et donne aux personnes le plaisir de boire du vin.

Le dispositif ou recipient permet une séparation sélective d'un mélange eau/alcool.

Pour cette séparation sélective nous sommes amenés à utiliser l'un ou l'autre des solides microporeux qui présentent généralement au moins les deux caractères suivants :
1°) un caractère hydrophobe pour exclure l'eau ; il s'agit ici de solides microporeux qui n'ont pas d'affinité pour l'eau mais qui retiennent l'alcool ;
2°) un caractère sélectif pour ne pas adsorber les autres molécules organiques autres que celles qui ont une taille inférieure ou égale aux molécules d'alcool éthylique.

Ce second caractère est basé sur deux phénomènes :
- le premier phénomène concerne une exclusion géométrique : la microporosité adaptée à la taille des molécules d'éthanol se situe autour de 6 à 7 angströms environ. Il y a donc lieu de mettre en oeuvre des structures du type zéolithique ou autres structures de cette taille. On opère alors un tamisage au niveau moléculaire. C'est le cas des ZSM-5 désaluminisées type silicalite. L'adsorption ou l'absorption se révélera correcte;
- le deuxième phénomène peut être l'exclusion cinétique : on peut envisager dans ce cas des structures microporeuses avec des ouvertures supérieures à 7 angströms, comme par exemple les tamis Y ou faujasites parfaitement désaluminisés (par un steaming, par exemple), à travers lesquels l'adsorption sera plus rapide pour les petites molécules que pour les grosses molécules.

En effet, dans le cas des ZSM-5 type silicalite (qui conviennent cependant tout à fait pour la présente invention) le taux d'adsorption de l'alcool éthylique se situe entre 12 et 17 % poids ; par contre pour un tamis Y désaluminisé (de type faujasite notamment), donc hydrophobe, on peut atteindre un taux d'adsorption de l'ordre de 30 % poids d'alcool éthylique. D'une façon pratique avec une ZSM-5 il faut environ 1 kg de cette zéolithe pour absorber complètement l'alcool contenu dans 1 litre de vin, alors que 300 g de tamis Y suffisent. La zéolithe Y a aussi l'avantage sur la ZSM-5 d'être plus facilement agglomérable sous forme de particules et en plus d'être moins chère.

La taille des cristallites joue aussi un rôle important en ce qui concerne la mise en oeuvre de ces poudres au sens de la facilité de filtration. En mélangeant une poudre fine de zéolithe avec le vin à désalcooliser, on obtient une suspension ; si cette méthode est très efficace en termes d'adsorption, elle pose le problème de la séparation physique du liquide et du solide en suspension. C'est pourquoi en utilisant des cristallites de plus grande taille on peut procéder par filtration, voire percolation, étant entendu que le phénomène d'adsorption est extrêmement rapide, de l'ordre de la minute. Outre certains types de zéolithes, divers solides microporeux sont capables aussi d'être mis en oeuvre dans la présente invention. On citera en particulier les solides suivants qui présentent par exemple la particularité d'être utilisables sous la forme de "nid d'abeille" ou monolithes. On citera ainsi aussi les polysilsesquioxanes pontés (matériaux organiques-inorganiques hybrides hautement poreux), les gels arylsilsesquioxanes et matériaux apparentés ; nouveaux hybrides de réseaux organiques et inorganiques.

Ces structures microporeuses contiennent essentiellement, comme dans les zéolithes, la chaîne Si-O-Si.

Les silices microporeuses amorphes sous forme de monolithes peuvent parfaitement remplir les conditions évoquées ci-dessus : le caractère hydrophobe, la taille des micropores de l'ordre de 5 à 7 angströms avec un caractère sélectif pour l'adsorption d'alcool éthylique.

Une autre famille de produits peut aussi satisfaire les conditions recherchées : les tamis moléculaires à chaîne carbonique.

Ce type de produit offre de nouvelles perspectives et peut assurer, avec un taux d'adsorption de l'alcool éthylique de l'ordre de 50 % voire plus, et, même beaucoup plus, une excellente séparation de l'alcool dans le vin.

Ces produits commercialisés ne sont en fait que des formes spéciales de charbon actif ; c'est pourquoi l'invention concerne aussi l'utilisation de ces formes spéciales de charbon actif obtenu soit par pyrolyse contrôlée des polymères organiques, d'anthracite, de coke voire de charbon de bois.

Enfin on peut obtenir un rendement de 50 % d'adsorption avec des talcs ayant subi un traitement spécial, notamment pour les mettre sous forme de monolithe.

Ces différents monolithes de l'arc antérieur englobent également les solides de type quartz et les fibres de carbone obtenus par exemple par pyrolyse de polymères polyéthyléniques (polymères rubanisés) (fibres de carbone activé).

Le choix judicieux des solides microporeux permet également de choisir le taux souhaité de désalcoolisation car en fonction des circonstances et de l'environnement, il n'est pas toujours nécessaire de vouloir à tout prix éliminer un maximum d'alcool. L'élimination de 25 % ou 30 % de l'alcool peut être suffisante dans certains cas.

Rappelons ici brièvement les étapes élémentaires qui permettent d'obtenir du vin.

Quand on vendange les grappes de raisin, les baies de ce raisin contiennent en surface une petite pellicule de poudre blanche qui est en fait formée de levures (ou enzymes). Quand on presse les grappes de raisin, que l'on laisse les rafles, la peau des baies de raisin, et les pépins ou non en contact avec le jus de raisin obtenu, il s'opère une réaction qui va transformer les sucres contenus dans le jus de raisin en alcool éthylique.

Cette réaction avec dégradation des sucres (ou vinification) qui peut durer plusieurs jours est une réaction enzymatique (ce sont les levures qui vont catalyser ces réactions de transformation des sucres en alcool), exothermique (avec dégagement de chaleur) et dégage du gaz carbonique. Les sucres contenus dans le jus de raisin peuvent être complètement transformés en alcool ou partiellement et forment dans ce dernier cas la famille des vins doux naturels (VDN).

Le taux d'avancement de ces réactions dépend de la capacité des enzymes à résister à la température lors de la vinification et/ou à la teneur en alcool qui à un certain niveau finit par tuer les levures et donc arrête la synthèse d'enzymes.

Le jus de raisin est un des rares jus de fruit contenant à l'état naturel de l'acide maléique.

La vinification une fois terminée, de deux choses l'une : ou on rajoute du SO₂ pour stopper toute autre évolution du vin, ou on laisse s'effectuer la réaction dite "malo-lactique" qui, sur le plan chimique, consiste à transformer l'acide maléique en acide lactique. Ce faisant, le vin obtenu a un caractère et un goût beaucoup plus agréables.

Cette réaction "malo-lactique" est catalysée par des bactéries soit contenues dans le vin, soit provenant de semences. C'est pourquoi en mettant du SO₂ on tue les bactéries et on bloque ainsi la "malo-lactique".

Cette réaction dite "malo-lactique" est une réaction athermique (ne mettant en jeu ni consommation ni fourniture de chaleur) et elle s'opère avec un dégagement de gaz carbonique.

Ce sont, décrites simplement, les étapes élémentaires de la fabrication du vin.

Or, dans le jus de raisin il existe, parmi les centaines de produits présents, le tryptophane qui est un acide aminé essentiel.

Dans l'étape de transformation des sucres en alcool comme on l'a vu précédemment, le tryptophane donne avec l'alcool un ester (acide + alcool donne un ester). Il se passe alors, toujours au cours de cette étape de vinification, une désamination oxydative de l'ester du tryptophane qui donne naissance à un diol (qui comporte deux fonctions alcool).

Il est vrai qu'il y a, d'une manière générale, des vins que l'on a plus envie de boire que d'autres, d'où notre idée d'enlever de l'alcool du vin sans enlever le plaisir de le consommer. Le vin ou la boisson alcoolisée au moins partiellement désalcoolisé(e) conserve à l'issue du procédé selon l'invention au moins en partie les molécules de tryptophane que renferme ce vin ou cette boisson totalement ou partiellement désalcoolisée.

Dans l'art antérieur, cité ci-dessus, on fait circuler la boisson alcoolisée sur au moins un lit d'au moins une substance solide ou procédé dans lequel on met la boisson alcoolisée en contact avec une couche d'au moins une substance solide, le diamètre des pores dudit lit ou de ladite couche et les caractéristiques d'hydrophobicité dudit lit ou de ladite couche permettant l'adsorption spécifique de l'éthanol et autres alcools à bas poids moléculaire, la dite substance solide étant choisie dans le groupe constitué par les zéolithes et les solides structure microporeuse de type monolithe, ainsi que par des mousses, voire des tissus de cesdites substances dont la structure poreuse est propice à l'adsorption.

Dans la présente invention, on a imaginé une mise en oeuvre très pratique pour les substances solides notamment à structure monolithique et/ou silicalite : L'invention consiste, non pas à percoler la boisson alcoolisée, mais à la verser directement aux heures de repas dans une carafe ou dans les verres des convives, cette carafe ou ces verres ayant été spécialement traités de façon à ce que leur surface interne ou paroi interne, est revêtue d'une couche dudit solide, par exemple d'une silicalite ou d'une silice microporeuse ultra fine dans laquelle on a créé une porosité particulière apte à réaliser l'invention. Le vin, versé dans la carafe ou dans le verre voit son taux d'alcool s'abaisser par exemple de 5 à 65 %, l'alcool restant absorbé ou adsorbé sélectivement dans la porosité du revêtement. Après avoir bu la boisson désalcoolisée, le verre ou la carafe est jeté ou bien encore on régénère la couche que contient le verre ou la carafe, en chauffant ce verre ou cette carafe à une température supérieure au point d'ébullition ou tout au moins au point d'évaporation de l'alcool ou des alcools absorbés ou adsorbés sur ladite couche, par exemple dans un lave vaisselle. L'alcool s'évapore et le verre ou la carafe revêtus de ladite silicalite ou produit équivalent sont aussitôt réutilisables.

## Revendications

1. Recipient pour éliminer d'une boisson alcoolisée au moins une partie de l'alcool (éthanol et autres alcools à bas poids moléculaire) qu'elle contient et pour conserver au moins en partie les molécules de composés qu'elle contient, dont le tryptophane, la boisson alcoolisée entrant en contact, dans ce récipient avec au moins une couche d'au moins une substance solide, le diamètre de pore de ladite couche et les caractéristiques d'hydrophobicité de cette couche permettant l'adsorption spécifique de l'éthanol et autres alcools à bas poids moléculaire, la dite substance solide étant choisie dans le groupe constitué par les zéolithes et les solides à structure microporeuse de type monolithe, ainsi que par les mousses ou tissus de cette dite substance, le récipient étant **caractérisé en ce qu'**il contient ladite boisson alcoolisée, et **en ce que** sa surface intérieure (paroi interne) est recouverte de ladite couche de ladite substance solide.

2. Récipient selon la revendication 1 ayant la forme d'une carafe ou d'un verre.

3. Procédé de régénération de la couche qui revêt la paroi interne du récipient selon la revendication 1 comprenant le chauffage dudit récipient à une température permettant l'évaporation de l'alcool ou des alcools contenus dans la boisson alcoolisée et qui avaient été absorbés ou adsorbés sur ladite couche.

## Patentansprüche

1. Behälter zum Entfernen aus einem alkoholhaltigen Getränk von wenigstens einem Teil des Alkohols (Ethanol und andere Alkohole mit niedrigem Molekulargewicht), den es enthält und zum Erhalten von wenigstens einem Teil der Moleküle von Verbindungen, die es enthält, darunter Tryptophan, wobei das alkoholhaltige Getränk in diesem Behälter in Kontakt mit wenigstens einer Schicht von wenigstens einer Feststoffsubstanz steht, der Porendurchmesser der Schicht und die Hydrophobizitätsmerkmale dieser Schicht die spezifische Adsorption des Ethanols und anderer Alkohole mit niedrigem Molekulargewicht ermöglichen, die Substanz gewählt ist aus der Gruppe, die gebildet wird durch die Zeolithe und die Feststoffe vom Monolithtyp mit mikroporöser Struktur sowie die Schäume oder Gewebe dieser Substanz und der Behälter **dadurch gekennzeichnet ist, dass** er das alkoholhaltige Getränk enthält und dadurch, dass seine Innenfläche (Innenwand) mit der Schicht der Feststoffsubstanz beschichtet ist.

2. Behälter nach Anspruch 1 mit der Form einer Karaffe oder eines Glases.

3. Verfahren zur Regenerierung der Schicht, die die Innenwand des Behälters nach Anspruch 1 auskleidet, welches das Erwärmen des Behälters auf eine Temperatur umfasst, die das Verdampfen des Alkohols oder der Alkohole ermöglicht, die in dem alkoholhaltigen Getränk enthalten sind und die auf der Schicht absorbiert oder adsorbiert worden sind.

## Claims

1. Receptacle for eliminating from an alcoholic drink at least part of the alcohol (ethanol and other low-molecular-weight alcohols) which it contains, and for retaining, at least in part, the molecules of compounds which it contains, including tryptophan, the alcoholic drink coming into contact in the receptacle with at least one layer of at least one solid substance, the pore diameter of said layer and the hydrophobicity characteristics of this layer allowing the specific adsorption of ethanol and other low-molecular-weight alcohols, said solid substance being chosen from the group made up of the zeolites and monolith-type solids with a microporous structure, as well as the foams or tissues of said substance, the receptacle being **characterized in that** it contains said alcoholic drink and **in that** its inner surface (internal wall) is covered by said layer of said solid substance.

2. Receptacle according to claim 1, having the form of a carafe or glass.

3. Process for regeneration of the layer covering the internal wall of the receptacle according to claim 1 comprising heating of said receptacle to a temperature allowing the evaporation of the alcohol or alcohols contained in the alcoholic drink which had been absorbed or adsorbed on said layer.
